## Europäisches Patentamt
## European Patent Office
## Office européen des brevets

(11) Veröffentlichungsnummer: **0 199 013**
B1

## (12) EUROPÄISCHE PATENTSCHRIFT

(45) Veröffentlichungstag der Patentschrift:
12.04.89

(51) Int. Cl.⁴: **F 16 D 23/14**

(21) Anmeldenummer: **86102242.4**

(22) Anmeldetag: **20.02.86**

(54) **Kupplungsausrücklager.**

(30) Priorität: **24.04.85 DE 3514772**

(43) Veröffentlichungstag der Anmeldung:
**29.10.86 Patentblatt 86/44**

(45) Bekanntmachung des Hinweises auf die Patenterteilung:
**12.04.89 Patentblatt 89/15**

(84) Benannte Vertragsstaaten:
**DE FR GB IT**

(56) Entgegenhaltungen:
**FR-A- 525 125**
**FR-A- 2 510 689**

(73) Patentinhaber: **INA Wälzlager Schaeffler KG, Industriestrasse 1-3 Postfach 1220, D-8522 Herzogenaurach (DE)**

(72) Erfinder: **Parzefall, Walter, Kettelerstrasse 1, D-8521 Bubenreuth (DE)**

(74) Vertreter: **Klug, Horst, Dipl.-Ing. (FH), c/o INA Wälzlager Schaeffler KG Postfach 12 20, D-8522 Herzogenaurach (DE)**

ACTORUM AG

## Beschreibung

Die Erfindung betrifft ein Kupplungsausrücklager, bestehend aus einem ein Wälzlager aufnehmenden Gehäuse, das an zwei einander gegenüberliegenden Stellen seines Umfanges sich radial erstreckende Lappen aufweist, an denen zwei parallele Arme einer Kupplungsausrückgabel anliegen, die das Gehäuse im Bereich zweier Schlüsselflächen umgreift.

Derartige Kupplungsrücklager sind z.B. nach der FR-A-2510689 bekannt und geben keinen Grund zur Beanstandung, wenn die sich radial erstreckenden Lappen eine solche Breite aufweisen, daß sie den von der Kupplungsausrückgabel ausgeübten Druck ohne bleibende Verformung aufnehmen können.

Durch die zunehmende Tendenz zu gedrängter Bauweise kommt es zu Einbausituationen, bei denen ein angrenzendes Bauteil so im Bereich des einen Lappens angeordnet ist, daß entweder nur dieser, oder aber auch beide Lappen in ihrer Breite reduziert werden müßten, damit sie außerhalb des Bereiches des angrenzenden Bauteiles zu liegen kommen. Reduziert man nur die Breite des einen Lappens, so erschwert dies die Montage deshalb, weil das Lager in einer ganz gezielten Einbaulage eingesetzt werden muß. Wenn man beide Lappen in ihrer Breite reduziert, so ist dieser Nachteil vermieden. Die Breitenreduzierung der Lappen kann jedoch den Nachteil nach sich ziehen, daß sie dann für die auftretenden Betätigungskräfte nicht mehr die ausreichende Festigkeit aufweisen.

Der Erfindung liegt die Aufgabe zugrunde, die geschilderten Nachteile zu vermeiden und die Lappen in einfacher Weise so auszubilden, daß das Lager problemlos montiert werden kann und die Lappen trotzdem die auftretende Belastung ohne schädliche Verformung aufnehmen können.

Erfindungsgemäß wird diese Aufgabe dadurch gelöst, daß die Lappen in Bezug auf eine mit der Lagerachse einerseits und den Berührungsstellen der Kupplungsausrückgabel mit den Lappen andererseits zusammenfallende Ebene in entgegengesetzter Richtung zueinander versetzt sind.

Durch die erfindungsgemäße Ausbildung ergibt sich einerseits der Vorteil, daß trotz der beengten räumlichen Verhältnisse die Freigängigkeit des Kupplungsausrücklagers gewährleistet ist. Andererseits werden Schwierigkeiten bei der Montage vermieden und eine ausreichende Dimensionierung der Lappen erzielt. Ein weiterer Vorteil ergibt sich durch die vergrößerte Schlüsselfläche, die eine verbesserte Führung ermöglicht, so daß ein Verdrehen des Lagers in der Kupplungsrückgabel vermindert wird.

Ein Ausführungsbeispiel der Erfindung ist in der Zeichnung dargestellt und wird nachfolgend näher beschrieben. Es zeigen:

Fig. 1 ein erfindungsgemäßes Kupplungsausrücklager in teilweisem Längsschnitt und

Fig. 2 das Kupplungsausrücklager in Ansicht in Richtung des Pfeiles II der Figur 1.

Das Kupplungsausrücklager besteht aus dem Gehäuse 1, das ein nicht dargestelltes Wälzlager aufnimmt und an zwei einander gegenüberliegenden Stellen seines Umfanges sich radial erstrekkende Lappen 2 aufweist. An den Lappen 2 liegen zwei parallele Arme 3 einer Kupplungsausrückgabel 4 an, die das Gehäuse 1 im Bereich zweier Schlüsselflächen 5 umgreift.

Das Gehäuse 1 ist in bekannter Weise unter Einwirkung der schwenkbar gelagerten Kupplungsausrückgabel 4 axial auf einem Führungsrohr 6 verschiebbar, um mit Tellerfederzungen 7 einer nicht gezeigten Kupplung zusammenzuwirken.

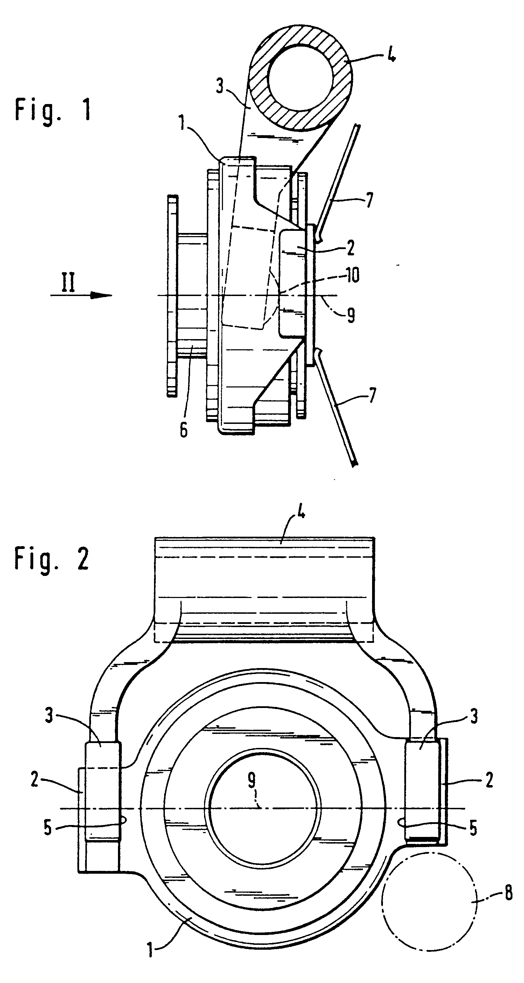

Wie Figur 2 zeigt, verläuft in umittelbarer Nähe des einen Lappens 2 eine angedeutete Welle 8. Aus diesem Grunde sind die Lappen 2 in Bezug auf eine mit der Lagerachse 9 einerseits und den Berührungsstellen 10 der Kupplungsausrückgabel 4 mit den Lappen 2 einerseits zusammenfallenden Ebene in entgegengesetzter Richtung zueinander versetzt.

## Patentanspruch

Kupplungsausrücklager, insbesondere für Kraftfahrzeuge, bestehend aus einem ein Wälzlager aufnehmenden Gehäuse (1), das an zwei einander gegenüberliegenden Stellen seines Umfanges sich radial erstreckende Lappen (2) aufweist, an denen an Berührungsstellen (10) zwei parallele Arme (3) einer Kupplungsausrückgabel (4) anliegen, die das Gehäuse im Bereich zweier Schlüsselflächen umgreift, dadurch gekennzeichnet, daß die Lappen (2) in Bezug auf eine mit der Lagerachse (9) einerseits und den Berührungsstellen (10) der Kupplungsausrückgabel (4) mit den Lappen (2) andererseits zusammenfallende Ebene entgegengesetzter Richtung zueinander versetzt sind.

## Claim

Clutch release bearing, in particular for automotive vehicles, consisting of a housing (1) accommodating a rolling bearing which has a two opposite places on its periphery radially extending tabs (2), on which at contact points (10) two parallel arms (3) of a clutch release fork (4) abut, which fits over the housing in the area of two flat key faces, characterised in that the tabs (2), in relation to a plane coinciding on one hand with the bearing axis (9) and the areas of contact (10) of the clutch release fork (4) with the tabs (2) on the other hand, are offset in opposite direction to one another.

## Revendication

Butée de débrayage, en particulier pour véhicules automobiles, comprenant un logement (1) recevant un roulement, qui comporte, en deux points mutuellement opposés de sa périphérie, des oreilles (2) dirigées radialement sur lesquelles sont appliquées, en des points de contact (10), deux branches parallèles d'une fourchette de débrayage (4) qui embrasse le logement dans la zone de deux surfaces de clavette, caractérisée en ce que les oreilles (2) sont décalées en sens contraire l'une de l'autre par rapport à un plan passant, d'une part, par l'axe (9) de la butée et, d'autre part, par les points de contact (10) de la fourchette de débrayage (4) avec les oreilles (2).

EP 0199013 B1

Fig. 1

Fig. 2

5